# EUROPÄISCHE PATENTSCHRIFT

(11) **EP 0 819 627 B1**
(45) Veröffentlichungstag und Bekanntmachung des Hinweises auf die Patenterteilung: **02.05.2002**
(21) Anmeldenummer: 97109925.4
(22) Anmeldetag: 18.06.1997
(51) Int. Cl.: B65G 47/91, B65G 57/04

(54) **Hubgerät zum Handhaben von Gegenständen sowie Einrichtung zum Be- und Entladen von Paletten**
Lifting apparatus for handling objects,and device for loading and unloading pallets
Appareil de levage pour la manutention d'objets,et dispositif pour le chargement et le déchargement

(30) Priorität: 03.07.1996 DE 19626826
(43) Veröffentlichungstag der Anmeldung: 21.01.1998
(73) Patentinhaber: Focke & Co. (GmbH & Co.), 27283 Verden (DE)
(72) Erfinder: Focke, Heinz, 27283 Verden (DE); Freudenberg, Harald, 31608 Marklohe (DE)
(74) Vertreter: Bolte, Erich, Dipl.-Ing.

(56) Entgegenhaltungen:
- DE-A- 4 122 953
- US-A- 4 723 353
- US-A- 5 199 845

## Beschreibung

Die Erfindung betrifft ein Hubgerät, nämlich einen Palettierer, mit als Gelenkarm ausgebildetem Ausleger und an diesem angebrachter Aufnahme zum Be- und Entladen von Paletten oder dergleichen.

Die Handhabung von großvolumigen Gegenständen in der Verpackungstechnik, insbesondere die Handhabung von Großverpackungen, wie Kartons, wird zunehmend automatisiert. Dies gilt auch für den Bereich der Beladung und Entladung von Paletten mit derartigen Kartons.

Bekanntermaßen werden sogenannte Palettierer eingesetzt für die automatische Beladung oder Entladung von Paletten. Die Palettierer sind Roboter mit einem Gelenkarm, an dessen Ende eine Aufnahme, üblicherweise ein Hubkopf, zum Erfassen mindestens eines Kartons oder dergleichen angeordnet ist. Durch die Bewegungsmöglichkeiten des Gelenkarms können die Kartons lagenweisen in vorgegebener Relativstellung auf der Palette positioniert oder von dieser abgenommen werden. Der Hubkopf ist dabei überwiegend mit Saugorganen versehen, die den Karton an der Oberseite unter Wirkung von Unterdruck erfassen. Ein Hubgerät der Obengenannten Art nach dem Oberbegriff des Anspruchs 1 ist zum Beispiel aus dem als nächstliegender Stand der Technik angesehenen Dokument US 5 199 845 bereits bekannt.

Die Erfindung geht bei der Automatisierung der Handhabungsvorgänge einen Schritt weiter, indem beispielsweise auch die notwendige Bewegung der (leeren) Paletten automatisiert ist.

Der Erfindung liegt dabei die Aufgabe zugrunde, ein Hubgerät vorzuschlagen, welches bei einfachem Aufbau und einfacher Funktionsweise in der Lage ist, unterschiedliche Gegenstände zu erfassen und zu transportieren, insbesondere alternativ Gegenstände wie Kartons und (leere) Paletten.

Zur Lösung dieser Aufgabe ist das erfindungsgemäße Hubgerät durch folgende Merkmale gekennzeichnet:
a) die Aufnahme des Palettierers ist ein Hubkopf mit Saugorganen, nämlich Saugleisten zum Erfassen der zu transportierenden Gegenstände,
b) an dem Hubkopf ist eine Zusatzaufnahme ansetzbar, insbesondere ein Palettengreifen, lösbar fixiert, die zum Erfassen und Halten weiterer zu Transportierender Gegenstände dient,
c) die Zusatzaufnahme ist durch die Saugorgane bzw. Saugleisten am Hubkopf fixierbar.

Der Erfindungsgedanke besteht darin, für die üblichen Transport- bzw. Handhabungsvorgänge eine standardmäßige Aufnahme, insbesondere einen Hubkopf mit Saugorganen, am Ausleger des Roboters vorzusehen. Für die Ausführung von Sonderaufgaben, insbesondere zur Handhabung von Paletten, wird am Hubkopf zeitweilig eine Zusatzaufnahme angebracht, die so ausgebildet ist, dass sie zum Erfassen und Halten der Paletten oder anderer Gegenstände geeignet ist. Diese Zusatzaufnahme wird bei einem Hubkopf mit Saugorganen vorzugsweise durch diese erfasst und gehalten.

Bekannt ist ein Hubgerät, bei dem Aufnahmen zum Erfassen unterschiedlicher Gegenstände an einem komplexen Hubkopf angebracht sind. Dieser ist so ausgebildet, dass alternativ eine Aufnahme zum Erfassen von einzelnen plattenförmigen Gegenständen durch einen Sauger und mit Hilfe von mechanischen Tragarmen möglich ist. Die alternativ anzubringende Aufnahme besteht ausschließlich aus Saugern, die zum Erfassen von plattenförmigen Gegenständen an deren Oberseite dienen. Diese Vorrichtung ist nicht geeignet, die Automatisierung bei der Be- und Entladung von Paletten zu verbessern, insbesondere deshalb, weil für die Handhabung unterschiedlicher Gegenstände jeweils mit beträchtlichem Montageaufwand entsprechende, angepasste Halteorgane bzw. Aufnahmen an dem Hubgerät angebracht werden müssen.

Bei der Erfindung ist die Zusatzaufnahme als Ergänzung an dem Hubkopf anbringbar. Die Zusatzaufnahme ist mit Halteorganen ausgerüstet, die an den jeweils zu erfassenden Gegenstand, zum Beispiel an die Gestaltung einer Palette angepasst sind. Diese bewegbaren Halteorgane werden nach einem weiteren Merkmal der Erfindung durch Betätigungsorgane am Hubkopf, insbesondere durch an diesem angebrachte Druckmittelzylinder betätigt, nämlich in Halte- oder Öffnungsstellung bewegt.

Die Erfindung betrifft weiterhin eine Einrichtung mit einem Hubgerät, insbesondere einem Palettierer bzw. Roboter zum Beladen oder Entladen von Paletten, wobei erfindungsgemäß einem zentral positionierten Palettierer mehrere Gegenstandsförderer zugeordnet sind, die in dessen Arbeitsbereich münden, wobei weiterhin in diesem Arbeitsbereich mehrere Palettenstationen zum Beladen durch den Roboter gebildet sind.

Weitere Merkmale der Erfindung betreffen die Ausbildung des Hubkopfes bzw. der Zusatzaufnahme einerseits und die Ausgestaltung der Einrichtung zum Beladen oder Entladen von Paletten andererseits. Ausführungsbeispiele der Erfindung werden nachfolgend anhand der Zeichnungen näher erläutert. Es zeigt:
- Fig. 1: eine Einrichtung zur Beladung von Paletten mit Gegenständen, nämlich Kartons, im schematischen Grundriß,
- Fig. 2: eine Aufnahme eines Palettierers, nämlich einen Hubkopf in Seitenansicht, teilweise geschnitten,
- Fig. 3: den Hubkopf gemäß Fig. 2 in einer Queransicht, ebenfalls teilweise geschnitten,
- Fig. 4: eine Zusatzaufnahme, nämlich ein Palettengreifer in schematischem Grundriß,
- Fig. 5: die Zusatzaufnahme in Montagestellung an dem Hubkopf gemäß Fig. 2 und Fig. 3 in Seitenansicht,
- Fig. 6: eine Einzelheit des Hubkopfes mit Zusatzaufnahme in Seitenansicht, bei vergrößertem Maßstab.

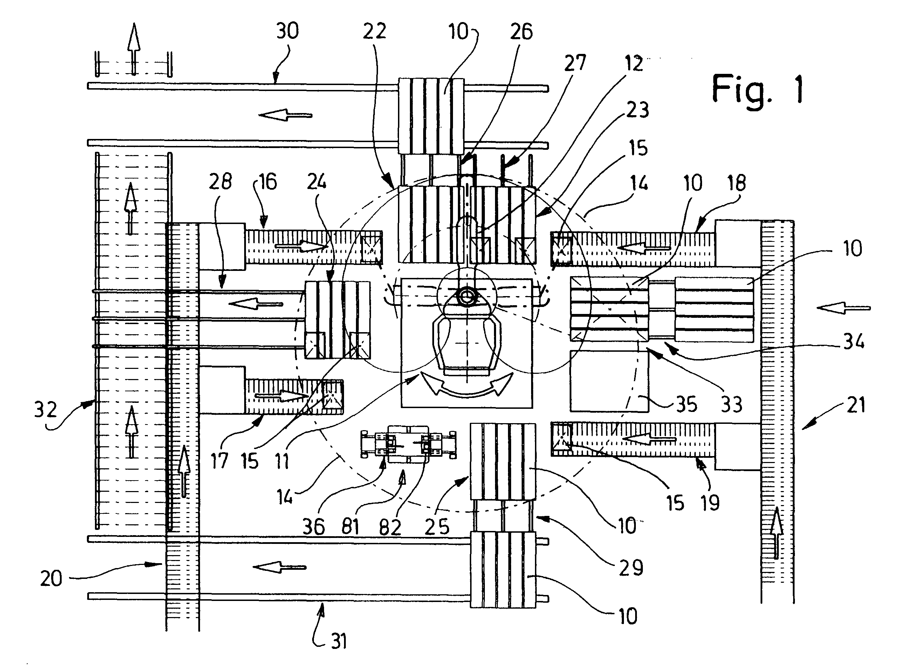

Eine Einrichtung bzw. Anlage zum Beladen von Paletten 10 mit Gegenständen zeigt Fig. 1 in schematischem Grundriß. Die Einrichtung ist für eine vollständig automatisierte Betriebsweise eingerichtet.

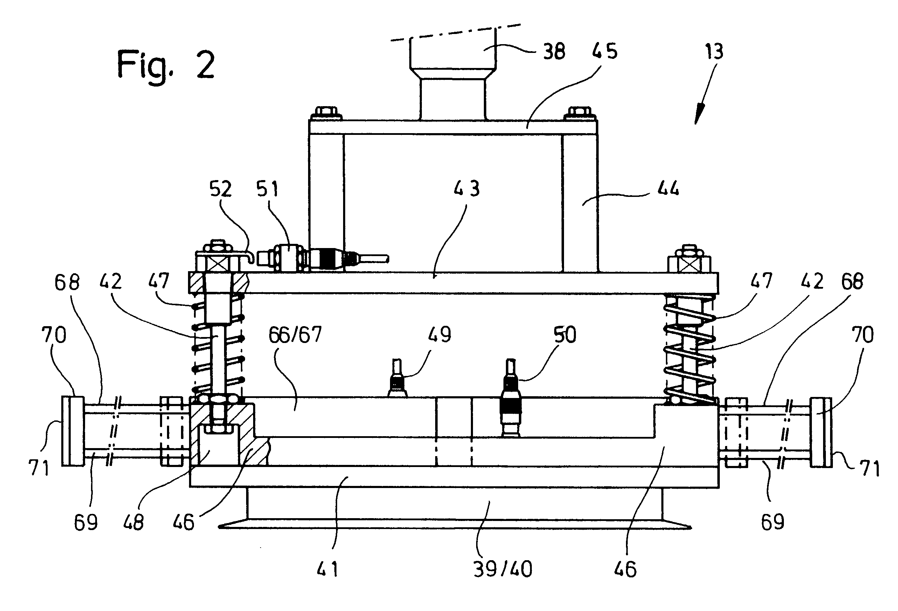

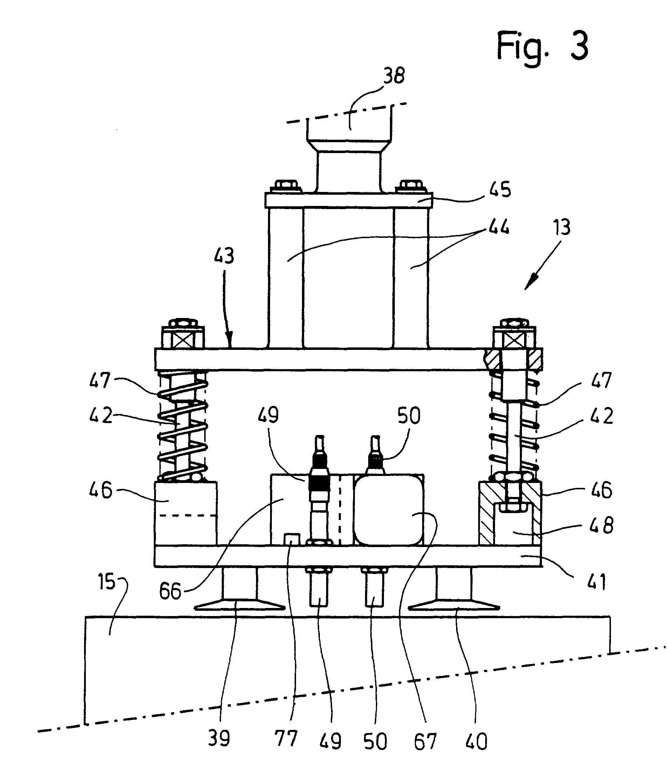

Zentrales Organ der Einrichtung ist ein Palettierer 11, der in der Mitte der Einrichtung positioniert ist. Der Palettierer 11 ist ein Roboter, der um eine aufrechte Achse drehbar ist. An einem auf- und abbewegbaren Gelenkarm 12 ist eine Aufnahme bzw. ein Hubkopf 13 angebracht, vorzugsweise in der Ausführung gemäß Fig. 2 und Fig. 3. Der Hubkopf 13 ist in Fig. 1 aus Gründen der Übersichtlichkeit nicht gezeigt.

Der Palettierer 11 hat einen durch die Drehbarkeit um eine Vertikalachse vorgegebenen Arbeitsbereich 14, der in Fig. 1 durch eine strichpunktierte Kreislinie markiert ist. Innerhalb dieses Arbeitsbereichs 14 können zu handhabende Gegenstände durch den Hubkopf 13 erfaßt, nämlich aufgenommen oder abgesetzt werden, und zwar in unterschiedlichen Positionen und auf unterschiedlichem Niveau.

Bei dem vorliegenden Ausführungsbeispiel sind einzeln zugeführte Kartons 15 auf Paletten 10 abzusetzen, nämlich in mehreren Lagen zu stapeln. Die Kartons 15 werden durch mehrere, im vorliegenden Falle vier Kartonförderer 16, 17, 18, 19 in den Arbeitsbereich 14 gefördert. Die Kartonförderer 16..19 enden demnach jeweils im Arbeitsbereich 14, so daß der am Ende des jeweiligen Kartonförderers 16..19 bereitgehaltene Karton 15 durch den Palettierer 11 bzw. dessen Hubkopf 13 erfaßt werden kann.

Die Kartons 15 werden durch Zuförderer 20, 21 an die Kartonförderer 16..19 übergeben. Im vorliegenden Falle sind zwei parallele, zu beiden Seiten des Arbeitsbereichs 14 und außerhalb desselben verlaufende Zuförderer 20, 21 vorgesehen. Je zwei Kartonförderer 16, 17 bzw. 18, 19 sind dem einen und anderen Zuförderer 20, 21 zugeordnet. Die Kartonförderer 16..19 erstrecken sich als Abzweigungen von den Zuförderern 20, 21 quer zu diesen, ebenfalls parallel zueinander. Die zugeführten Kartons 15 können unterschiedlich sein hinsichtlich des Inhalts, so daß durch die Zuförderer 20, 21 bzw. die Kartonförderer 16..19 eine Artensortierung stattfindet.

Im Arbeitsbereich 14 sind mehrere, im vorliegenden Falle vier Palettenstationen 22, 23, 24 und 25 gebildet. Im Bereich einer derartigen Palettenstation 22..25 wird jeweils eine (zunächst leere) Palette 10 bereitgehalten, um nach und nach mit Kartons 15 beladen zu werden.

Jeder Palettenstation 22..25 ist ein Palettenförderer 26, 27, 28, 29 zugeordnet. Bei diesen Palettenförderern handelt es sich um radial oder annähernd radial zum Arbeitsbereich 14 gerichtete Fördergurte, die jeweils eine beladene Palette 10 aus dem Bereich der Palettenstation 22..25 abtransportieren und an einen Förderer übergeben. Im vorliegenden Falle sind zwei außerhalb des Arbeitsbereichs 14 verlaufende, parallele Zwischenförderer 30, 31 vorgesehen, die die (beladenen) Paletten 10 auf einem Abförderer 32 absetzen. Bei der in Fig. 1 gezeigten Ausführung werden die Paletten 10 der Palettenstation 24 durch den Palettenförderer 28 unmittelbar zum Abförderer 32 transportiert. Der Palettenstation 25 ist der Zwischenförderer 31 zugeordnet. Auf der zur Palettenstation 25 gegenüberliegenden Seite des Arbeitsbereichs 14 sind zwei Palettenstationen 22, 23 unmittelbar nebeneinander angeordnet. Diese sind beide über die Palettenförderer 26, 27 an den Zwischenförderer 30 angeschlossen. Der Palettenförderer 28 ist so positioniert, daß die Paletten 10 durch diesen in einer Ebene oberhalb des Zuförderers 20 transportiert werden können.

Die Palettenstationen 22..25 sind unregelmäßig innerhalb des kreisflächenförmigen Arbeitsbereichs 14 positioniert. Ein Grund hierfür ist die Einrichtung einer Stapelstation 33 für leere Paletten 10. Ein ausreichender Vorrat an leeren Paletten 10 wird hier innerhalb des Arbeitsbereichs 14 aufrechterhalten, derart, daß jeweils eine obere Palette 10 erfaßt werden kann, und zwar durch den Palettierer 11. Die leeren Paletten 10 werden außerhalb des Arbeitsbereichs 14 auf einem Beschickungsförderer 34 abgesetzt, und zwar als Stapel. Dieser wird dann nach Entleerung der Stapelstation 33 insgesamt in diese durch den Beschickungsförderer 34 transportiert.

Neben der Stapelstation 33 für die leeren Paletten 10 ist - ebenfalls mindestens teilweise innerhalb des Arbeitsbereichs 14 - ein Zwischenlagen-Vorrat 35 gebildet. Es handelt sich dabei um übereinandergestapelte Zwischenlagen aus Papier, Karton oder Folie. Jeweils eine Zwischenlage wird vom Palettierer 11 abgenommen und auf eine komplette Lage aus Kartons 15 auf einer Palette abgelegt.

Schließlich ist im Arbeitsbereich 14 eine Station für eine noch zu beschreibende Zusatzaufnahme, nämlich für einen Palettengreifer 36, gebildet. Die genannte Station besteht aus einem ortsfesten Traggestell 37 für diesen Palettengreifer 36.

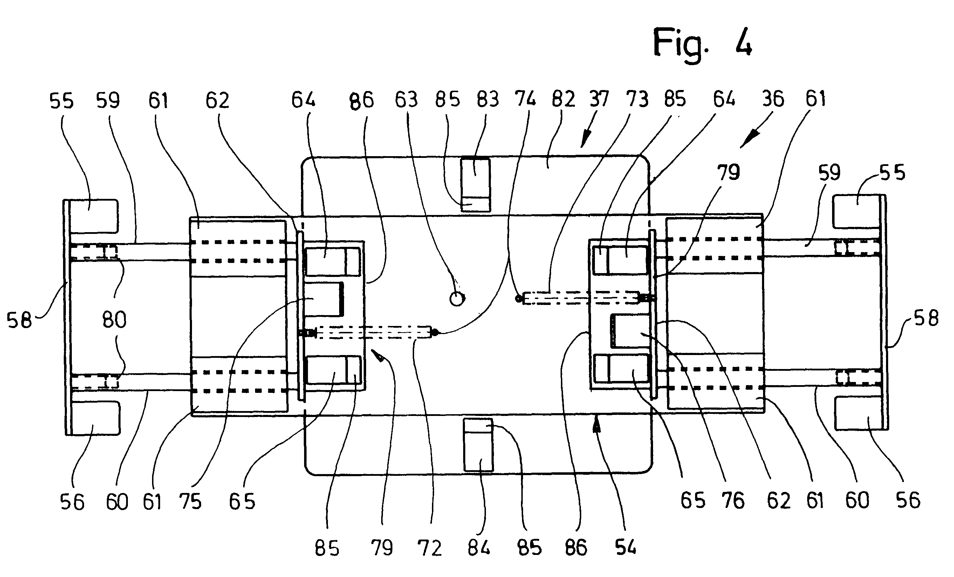

Der Palettierer 11 ist vorzugsweise mit einem Hubkopf 13 ausgerüstet, wie im einzelnen in Fig. 2 bis Fig. 6 gezeigt.

Der Hubkopf 13 ist an einem aufrechten Tragzapfen 38 am Ende des Gelenkarms 12 angebracht. Zum Erfassen der Gegenstände bzw. Kartons 15 befinden sich an der Unterseite des Hubkopfes 13 Saugorgane, die an eine Unterdruckquelle angeschlossen sind. Bei dem gezeigten Ausführungsbeispiel handelt es sich dabei um zwei langgestreckte, parallele Saugleisten 39, 40. Diese kommen jeweils an der Oberseite eines Kartons 15 zur Anlage, um diesen zu erfassen.

Der Hubkopf 13 ist im vorliegenden Fall mit einer Hauptplatte 41 versehen. An deren Unterseite sind die Saugleisten 39, 40 angebracht. Über Tragorgane, nämlich über vier an den Ecken angebrachte Tragbolzen 42, ist die Hauptplatte 41 mit einem Zwischenträger, nämlich einer Tragplatte 43 verbunden. An der Oberseite derselben befinden sich aufrechte Verbindungsstangen 44, die den Hubkopf 13 mit einem Flansch 45 an der Unterseite des Tragzapfens 38 verbinden.

Die Hauptplatte 41 ist in Aufwärtsrichtung elastisch verschiebbar gelagert, nämlich an der Tragplatte 43. Die Tragbolzen 42 sind mit den unteren Enden in rippenartigen Tragkörpern 46 verankert, die an der Oberseite der Hauptplatte 41 an zwei einander gegenüberliegenden Rändern angebracht sind. Die gegenüberliegenden, oberen Enden der Tragbolzen 42 sind verschiebbar in der Tragplatte 43 gelagert. Auf den Tragkörpern 46 einerseits und an der Unterseite der Tragplatte 43 andererseits stützen sich elastische Organe ab, und zwar Druckfedern 47, die jeweils die Tragbolzen 42 umgeben. Beim Aufsetzen des Hubkopfes 13 auf einem Gegenstand wird somit die Hauptplatte 41 federnd nach oben bewegt, und zwar gegen die Belastung der Druckfedern. Die unteren Enden der Tragbolzen sind in einem Hohlraum 48 der Tragkörper 46 fest verankert.

Auf der Hauptplatte 41 sind Handhabungs- und Steuerorgane für den Hubkopf 13 montiert, unter anderem auch Leitungen (nicht gezeigt) zur Versorgung der Saugleisten 39, 40 mit Unterdruck. Des weiteren sind im vorliegenden Falle an der Hauptplatte 41 (optoelektronische) Sensoren 49, 50 montiert, die den Hubkopf 13 steuern, nämlich ein Steuersignal erzeugen, wenn ein Gegenstand bzw. Karton 15 erfaßt worden ist. Die an der Unterseite aus der Hauptplatte 41 herausragenden Sensoren 49, 50 zeigen das Vorhandensein bzw. das Erfassen eines Kartons 15 dadurch an, daß beide Sensoren 49, 50 aktiviert sind.

Ein weiteres Steuerorgan, nämlich ein berührungsloser Taster, also ein sogenannter Initiator 51, ist auf der Tragplatte 43 montiert. Dieser Initiator 51 erzeugt ein Steuersignal, wenn der Hubkopf 13 auf der Oberseite eines Gegenstands bzw. Kartons 15 aufsetzt. Dem Initiator 51 ist eine Tastfahne 52 zugeordnet. Diese ist hier im Bereich eines Tragbolzens 42 befestigt. Bei der elastischen Aufwärtsbewegung der Hauptplatte 41 und damit der Tragbolzen 42 wird die Tastfahne 52 relativ zum Initiator 51 bewegt, wodurch ein Steuersignal erzeugt wird.

Eine weitere Besonderheit des Hubkopfes 13 besteht darin, daß dieser für die Aufnahme und den Transport von (leeren) Paletten 10 eingerichtet werden kann. Zu diesem Zweck wird zeitweilig am Hubkopf 13 eine Zusatzaufnahme angebracht, nämlich der Palettengreifer 36. Dieser ist so ausgebildet, daß der Hubkopf 13 den Palettengreifer 36 selbsttätig aufnehmen und halten sowie nach Beendigung eines Palettentransports absetzen kann. Auch die Betätigung des Palettengreifers 36 erfolgt vom Hubkopf 13 aus.

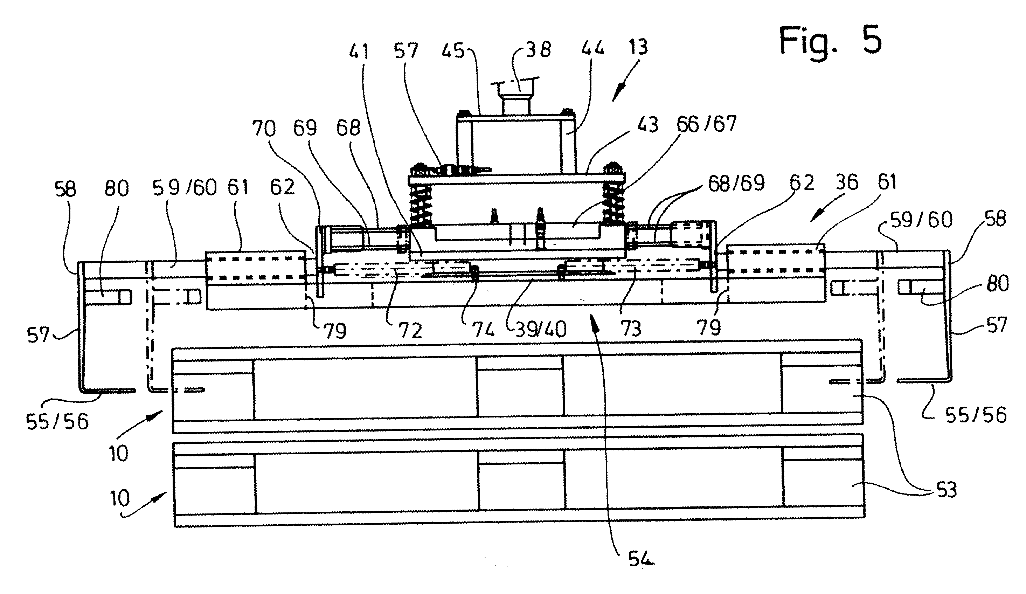

Der Palettengreifer 36 besteht aus einer zentralen plattenförmigen Trageinheit 54. Auf dieser sind Greif- bzw. Halteorgane angebracht, die zum Erfassen jeweils einer Palette 10 dienen. Es handelt sich dabei im vorliegenden Falle um Tragschenkel 55, 56, die unter die Palette 10 fassen bzw. in eine seitliche Öffnung 53 einer üblichen Palette 10 eintreten (strichpunktierte Position in Fig. 5). Obere randseitige Wandungen der Palette 10 liegen bei Aufwärtsbewegung des Hubkopfes 13 mit Palettengreifer 36 auf den Tragschenkeln 55, 56 auf. Diese sind über aufrechte Stege 57 mit einer quergerichteten, plattenförmigen Traverse 58 verbunden. Diese wiederum ist an den Enden von Haltestangen 59, 60 angebracht, verbindet diese miteinander.

Die Haltestangen 59, 60 sind als Traggestell für die die Palette 10 erfassenden Greiforgane auf der Oberseite der plattenförmigen Trageinheit 54 in Längsrichtung verschiebbar. Zu diesem Zweck sind an einander gegenüberliegenden Endbereichen der langgestreckten, rechteckigen Trageinheit 54 Führungsstücke 61 angebracht mit durchgehenden Bohrungen zur gleitenden Lagerung und Führung der Haltestangen 59, 60.

Die zur Traverse 58 gegenüberliegenden Enden der Haltestange 59, 60 sind durch eine Verbindungsplatte 62 miteinander verbunden. An dieser werden Betätigungsorgane wirksam zum Verschieben der Haltestange 59, 60 und damit der Tragschenkel 55, 56 als Greiforgane. Zum Erfassen einer Palette 10 werden die paarweise betätigten Tragschenkel 55, 56 auseinanderbewegt (Stellung mit ausgezogenen Linien in Fig. 5). In dieser Relativstellung kann die aus Hubkopf 13 und Palettengreifer 36 bestehende Aufnahmeeinheit über eine Palette 10 gefahren und abgesenkt werden (Fig. 5), inbesondere im Bereich der Stapelstation 33. Durch Einfahren der Haltestangen 59, 60 werden die Greiforgane, nämlich Tragschenkel 55, 56 in Aufnahmestellung für die Palette 10 gebracht. Diese kann nunmehr durch den Palettierer 10 angehoben und transportiert werden.

Der Palettengreifer 36 wird durch die vorhandenen Halteorgane des Hubkopfes 13, nämlich durch die Saugleisten 39, 40 erfaßt und am Hubkopf 13 gehalten. Die Saugleisten 39, 40 werden dabei an der Oberseite der plattenförmigen Trageinheit 54 wirksam, und zwar exakt im mittleren Bereich, so daß der Palettengreifer 36 in einer Gleichgewichtsstellung am Hubkopf 13 hängt. In der Trageinheit 54 ist im vorliegenden Falle eine Bohrung 63 angebracht, die einem der Sensoren 49, 50 zugeordnet ist. Dadurch wird bei Ankopplung des Palettengreifers 36 am Hubkopf 13 nur einer der Sensoren 49, 50 aktiv. Für die Steuerung ergibt sich daraus ein Signal dahingehend, daß nun ein Palettengreifer 36 am Hubkopf 13 angebracht ist.

Die Greiforgane für die Palette 10, also die Tragschenkel 55, 56, sind bei diesem Ausführungsbeispiel vom Hubkopf 13 aus betätigbar. Zu diesem Zweck sind am Hubkopf 13 Druckmittelzylinder 66, 67 angebracht. Es handelt sich dabei um langgestreckte Organe, die nebeneinander liegend auf der Oberseite der Hauptplatte 41 angebracht sind und in entgegengesetzten Richtungen wirken.

Die Druckmittelzylinder 66, 67 wirken über Kolbenstangen 68, 69 auf die Greiforgane. Bei dem vorliegenden Beispiel sind jedem Druckmittelzylinder 66, 67 zwei parallele Kolbenstangen 68, 69 zugeordnet, deren freie Enden durch eine Druckplatte 70 miteinander verbunden sind. Diese wirkt als Druckstempel beim Verschieben der Greiforgane, also der Tragschenkel 55, 56. Die Druckplatte 70 wird dabei durch Ausfahren der Kolbenstangen 68, 69 gegen die jeweils zugeordnete Verbindungsplatte 62 gefahren. Die Druckplatte 70 hat an der freien Außenseite ein elastisches Polster 71, welches an der Verbindungsplatte 62 zur Anlage kommt. In Fig. 2 ist in ausgezogenen Linien die ausgefahrene Stellung der Druckplatte 70 und in strichpunktierten Linien die eingefahrene Stellung gezeigt.

Die Druckmittelzylinder 66, 67 bzw. die Druckplatten 70 wirken nur in einer Richtung, nämlich in ausfahrendem, spreizendem Sinne auf die Greiforgane des Palettengreifers 36. Die gegenläufige Bewegung wird im vorliegenden Falle durch ein jedem Greiforgan bzw. jedem Paar von Tragschenkeln 55, 56 zugekehrtes Rückholorgan bewirkt. Es handelt sich dabei um Zugfedern 72, 73, die ständig am Palettengreifer 36 angeordnet sind, nämlich an der Oberseite der Trageinheit 54. Das eine Ende der Zugfeder 72, 73 ist mit der Verbindungsplatte 62 für die Haltestangen 59, 60 verbunden. Das andere Ende der Zugfeder 72, 73 ist über ein Halteelement 74 mit der Trageinheit 54 verbunden. Die Zugfedern 72, 73 werden durch Ausfahren der Kolbenstangen 68, 69 gespannt. Beim Einziehen der Kolbenstangen 68, 69 ziehen die Zugfedern 72, 73 das Greiforgan, nämlich die Tragschenkel 55, 56 in die Greifstellung an der Palette 10 (strichpunktiert in Fig. 5). Bei der Freigabe der Palette 10, nämlich beim Absetzen derselben im Bereich einer Palettenstation 22..25, laufen die Bewegungsvorgänge entsprechend in umgekehrter Richtung ab.

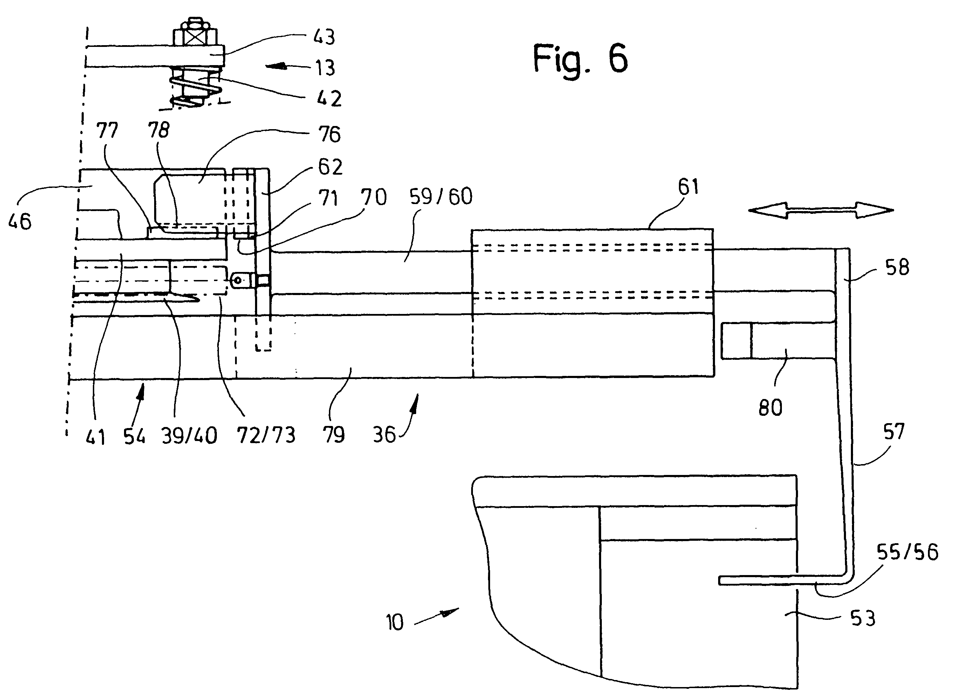

Die Haltekraft der Saugleisten 39, 40 für den Palettengreifer 36 am Hubkopf 13 kann gesichert bzw. ersetzt werden durch zusätzliche Kupplungsorgane. Diese bestehen beim vorliegenden Ausführungsbeispiel aus Tragklötzen 75, 76 am Palettengreifer 36. Diese Tragklötze 75, 76 werden in eine formschlüssige Verbindungsposition mit dem Hubkopf 13 gebracht, und zwar im vorliegenden Falle in der (eingefahrenen) Greifposition des Palettengreifers 36 (strichpunktiert in Fig. 5 bzw. Stellung gemäß Fig. 6). An jeder Verbindungsplatte 62 ist auf der dem Hubkopf 13 zugekehrten Seite ein Tragklotz 75, 76 angebracht. Beim Einziehen der Greiforgane, also beim Zurückholen der Verbindungsplatten 62 durch die Zugfedern 72, 73, wird der Tragklotz 75, 76 in eine Position oberhalb der Hauptplatte 41 gefahren (Stellung gemäß Fig. 6). Beim Anheben des Hubkopfes 13 legt sich der Tragklotz 75, 76 auf die Oberseite der Hauptplatte 41 und überträgt somit die Gewichtskräfte des Palettengreifers 36 ganz oder teilweise auf den Hubkopf 13. Zur exakten Positionierung ist auf der Oberseite der Hauptplatte 41 eine Paßfeder 77 im Bewegungsbereich der Tragklötze 75, 76 angebracht. Eine Nut 78 an der Unterseite der Tragklötze 75, 76 kommt in Eingriff mit der Paßfeder 77 und bewirkt dadurch eine zusätzliche Justierung zwischen Hubkopf 13 und Palettengreifer 36.

Die plattenförmige Trageinheit 54 des Palettengreifers 36 ist mit Ausnehmungen 79 versehen. In diese tritt ein unterer Bereich der Verbindungsplatte 62 bei den hin- und hergehenden Bewegungen ein. Des weiteren sind am Steg 57 bzw. an der Traverse 58 Abstandhalter 80 angeordnet. Diese bestimmen gegen die Wirkung der Zugfedern 72, 73 die Greifstellung der Tragschenkel 55, 56 durch Anlage an der Trageinheit 54.

Der Palettengreifer 36 wird nur von Zeit zu Zeit eingesetzt, nämlich mit dem Hubkopf 13 verbunden. Während des überwiegend dauernden Vorgangs der Palettenbeladung durch den Hubkopf 13 ist der Palettengreifer 36 in einer Lagerstation 81 positioniert. Diese besteht aus dem tischartigen Traggestell 37 mit einer Lagerplatte 82. Auf dieser ruht der Palettengreifer 36, und zwar in einer exakt ausgerichteten Stellung.

Traggestell 37 und Palettengreifer 36 sind für eine selbsttätig erzielbare exakte Relativstellung aufeinander abgestimmt. Auf der Oberseite der Lagerplatte 62 sind feststehende Justierorgane angebracht, nämlich jeweils einander gegenüberliegende Zentrierklötze 64, 65 und Positionsklötze 63, 64. Die vorgenannten Klötze weisen jeweils einander zugekehrte Schrägflächen 85 auf, die das selbständige Ausrichten der Greifeinheit 36 auf dem Traggestell 37 erleichtern.

Die an Querrändern der Lagerplatte 82 paarweise angeordneten Zentrierklötze 64, 65 treten in die jeweils zugeordnete Ausnehmung 79 der plattenförmigen Trageinheit 54 ein. Einander zugekehrte Randbegrenzungen 86 der Ausnehmungen 79 bilden eine Zentrier- bzw. Anlagefläche für die Zentrierklötze 64, 65 in Längsrichtung des Palettengreifers 36.

In querliegender Richtung wirken die Positionsklötze 83 und 84 an Längsrändern der Trageinheit 54. Der Palettengreifer 36 ist dadurch zuverlässig exakt auf dem Traggestell 37 positioniert, so daß der entsprechend gesteuerte Palettierer 11 bzw. dessen Hubkopf 13 den Palettengreifer 36 exakt erfassen können.

Die in die Ausnehmungen 79 eintretenden Zentrierklötze 64, 65 dienen zugleich als Anlage für die Verbindungsplatten 62 der Haltestangen 59, 60. Die Verbindungsplatten 62 werden durch die Zugfedern 72, 73 gegen die Zentrierklötze 64, 65 gezogen. In der Wartestellung des Palettengreifers 36 auf dem Traggestell 37 befinden sich demnach die Greiforgane, nämlich die Tragschenkel 55, 56, in teilweise ausgefahrener Stellung. Diese Stellung ist erforderlich, damit der Hubkopf 13 bei Aufnahme des Palettengreifers 36 durch Absenken auf die Trageinheit 54 desselben an den Tragklötzen 75, 76 vorbeibewegt werden kann.

Der im vorliegenden Falle als Palettengreifer 36 ausgebildete Zusatzträger kann auch für die Aufnahme anderer Gegenstände gestaltet sein, die von Zeit zu Zeit im Rahmen der selbsttätigen Fördermaßnahmen gehandhabt werden müssen.

### Bezugszeichenliste:

- 10: Palette
- 11: Palettierer
- 12: Gelenkarm
- 13: Hubkopf
- 14: Arbeitsbereich
- 15: Karton
- 16: Kartonförderer
- 17: Kartonförderer
- 18: Kartonförderer
- 19: Kartonförderer
- 20: Zuförderer
- 21: Zuförderer
- 22: Palettenstation
- 23: Palettenstation
- 24: Palettenstation
- 25: Palettenstation
- 26: Palettenförderer
- 27: Palettenförderer
- 28: Palettenförderer
- 29: Palettenförderer
- 30: Zwischenförderer
- 31: Zwischenförderer
- 32: Abförderer
- 33: Stapelstation
- 34: Beschickungsförderer
- 35: Zwischenlagen-Vorrat
- 36: Palettengreifer
- 37: Traggestell
- 38: Tragzapfen
- 39: Saugleiste
- 40: Saugleiste
- 41: Hauptplatte
- 42: Tragbolzen
- 43: Tragplatte
- 44: Verbindungsstange
- 45: Flansch
- 46: Tragkörper
- 47: Druckfeder
- 48: Hohlraum
- 49: Sensor
- 50: Sensor
- 51: Initiator
- 52: Tastfahne
- 53: Öffnung
- 54: Trageinheit
- 55: Tragschenkel
- 56: Tragschenkel
- 57: Steg
- 58: Traverse
- 59: Haltestange
- 60: Haltestange
- 61: Führungsstück
- 62: Verbindungsplatte
- 63: Bohrung
- 64: Zentrierklotz
- 65: Zentrierklotz
- 66: Druckmittelzylinder
- 67: Druckmittelzylinder
- 68: Kolbenstange
- 69: Kolbenstange
- 70: Druckplatte
- 71: Polster
- 72: Zugfeder
- 73: Zugfeder
- 74: Halteelement
- 75: Tragklotz
- 76: Tragklotz
- 77: Paßfeder
- 78: Nut
- 79: Ausnehmung
- 80: Abstandhalter
- 81: Lagerstation
- 82: Lagerplatte
- 83: Positionsklotz
- 84: Positionsklotz
- 85: Schrägfläche
- 86: Randbegrenzung

## Patentansprüche

1. Hubgerät, nämlich Palettierer (11), mit als Gelenkarm (12) ausgebildetem Ausleger und an diesem angebrachter Aufnahme zum Be- und Entladen von Paletten (10) oder dergleichen, **gekennzeichnet durch** folgende Merkmale:
a) die Aufnahme des Hubgerätes (11) ist ein Hubkopf (13) mit Saugorganen, nämlich Saugleisten (39, 40), zum Erfassen der zu transportierenden Gegenstände,
b) an dem Hubkopf (13) ist eine Zusatzaufnahme, insbesondere ein Palettengreifer (36), lösbar fixiert, die zum Erfassen und Halten weiterer zu Transportierender Gegenstände dient,
c) die Zusatzaufnahme ist **durch** die Saugorgane bzw. Saugleisten (39, 40) am Hubkopf (13) fixierbar.

2. Hubgerät nach Anspruch 1, **dadurch gekennzeichnet, dass** die Zusatzaufnahme, insbesondere der Palettengreifer (36), bewegbare Halteorgane zum Erfassen eines Gegenstands aufweist, insbesondere Halteklauen, Tragschenkel (55, 56) oder dergleichen, die durch am Hubkopf (13) angeordnete Betätigungsorgane, wie Druckmittelzylinder (66, 67), aus- und einfahrbar sind.

3. Hubgerät nach Anspruch 1 oder 2, **dadurch gekennzeichnet, daß** die Zusatzaufnahme, insbesondere der Palettengreifer (36) durch zusätzliche mechanische Kupplungsorgane an dem Hubkopf (13) lösbar fixierbar ist, insbesondere durch wenigstens einen Tragklotz (75, 76), der bei Bewegung der Greiforgane bzw. Tragschenkel (55, 56) in die Greifstellung in Verriegelungs- bzw. Kupplungsstellung bewegbar ist.

4. Hubgerät nach Anspruch 2 oder einem der weiteren Ansprüche, **dadurch gekennzeichnet, daß** am Hubkopf (13), insbesondere auf einer Hauptplatte (41) in Horizontalrichtung bewegbare Druckmittelzylinder (66, 67) angeordnet sind, deren Kolbenstangen (68, 69) nach beiden Seiten in entgegengesetzten Richtungen ausfahrbar sind zur Betätigung von Halteorganen des Palettengreifers (36).

5. Hubgerät nach Anspruch 4 oder einem der weiteren Ansprüche, **dadurch gekennzeichnet, daß** am Palettengreifer (36) seitlich, insbesondere in Horizontalebene aus- und einfahrbare Greiforgane in Führungen verschiebbar gelagert sind, wobei an den Halteorganen Mitnehmer angebracht sind, insbesondere aufrechte Verbindungsplatten (62), an denen die Kolbenstangen (68, 69) der Druckmittelzylinder (66, 67) beim Ausfahren Anlage erhalten zum Seitwärtsbewegen der Halteorgane bzw. Tragschenkel (55, 56).

6. Hubgerät nach Anspruch 5 oder einem der weiteren Ansprüche, **dadurch gekennzeichnet, daß** die Halteorgane, insbesondere Tragschenkel (55, 56) des Palettengreifers (36) in Richtung zueinander durch am Palettengreifer angeordnete Rückholorgane bewegbar sind, insbesondere durch Zugfedern (72, 73).

7. Hubgerät nach Anspruch 1 oder einem der weiteren Ansprüche, **dadurch gekennzeichnet, daß** ein Tragteil des Hubkopfes (13) in Aufwärtsrichtung elastisch verschiebbar ist, insbesondere die Hauptplatte (41), die an Tragbolzen (42) mit zusammendrückbaren Federelementen, nämlich Druckfedem (47), gelagert ist.

8. Hubgerät nach Anspruch 1 oder einem der weiteren Ansprüche, **dadurch gekennzeichnet, dass** von dem Palettierer (11) aufnehmbare Kartons für die Beladung der Paletten (10) durch mehrere, insbesondere vier Kartonförderer (16, 17, 18, 19) im Arbeitsbereich (14) des Palettierers (11) münden und dass ebenfalls mehrere, insbesondere vier Palettenstationen (22, 23, 24, 25), je mit einer zu beladenden Palette (10), im Arbeitsbereich (14) des Palettierers (11) gebildet sind, wobei die Kartonförderer (16..19) je einer Palettenstation (22..25) zugeordnet sind, derart, dass die auf den Kartonförderern (16..19) ankommenden Kartons (15) von dem gemeinsamen Palettierer (11) jeweils auf einer der Paletten (10) absetzbar sind.

9. Hubgerät nach Anspruch 8, **dadurch gekennzeichnet, dass** je zwei vorzugsweise parallel laufende Kartonförderer (16, 17; 18, 19) an einen gemeinsamen Zuförderer (20, 21) für Kartons (15) anschließen.

10. Hubgerät nach Anspruch 8 oder 9, **dadurch gekennzeichnet, dass** im Arbeitsbereich (14) des Palettierers (11) zusätzlich eine Stapelstation (33) für leere, zu beladende Paletten (10) sowie gegebenenfalls ein Zwischenlagen-Vorrat (35) aus übereinandergestapelten Zwischenlagen gebildet ist.

11. Hubgerät nach Anspruch 8 oder einem der weiteren Ansprüche, **dadurch gekennzeichnet, dass** im Arbeitsbereich (14) des Palettierers (11) eine Lagerstation (81) für eine Zusatzaufnahme, insbesondere für einen Palettengreifer (36) gebildet ist, insbesondere eine tischartige Tragvorrichtung mit Lagerplatte für den Palettengreifer (36).

## Claims

1. Lifting apparatus, namely a palletizer (11), having a boom constructed as a hinged arm (12) and a holder fitted to the said boom for loading and unloading pallets (10) or the like, **characterized by** the following features:
a) the holder of the lifting apparatus (11), is a lifting head (13) having suction elements, namely suction strips (39, 40), for gripping the objects to be transported,
b) detachably fixed to the lifting head (13) is an additional holder, in particular a pallet gripper (36), which is used to grip and hold further objects to be transported,
c) the additional holder can be fixed to the lifting head (13) by the suction elements or suction strips (39, 40).

2. Lifting apparatus according to Claim 1, **characterized in that** the additional holder, in particular the pallet gripper (36), has moveable holding elements for gripping an object, in particular holding claws, load-bearing legs (55, 56) or the like, which can be extended and retracted by means of actuating elements, such as pressure-medium cylinders (66, 67), arranged on the lifting head (13).

3. Lifting apparatus according to Claim 1 or 2, **characterized in that** the additional holder, in particular the pallet gripper (36), can be fixed detachably to the lifting head (13) by additional mechanical coupling elements, in particular by at least one load-bearing block (75, 76) which, giving movement of the gripping elements or load-bearing legs (55, 56) into the gripping position, can be moved into a locking or coupling position.

4. Lifting apparatus according to Claim 2 or one of the further claims, **characterized in that** on the lifting head (13), in particular on a main plate (41), there are arranged pressure-medium cylinders (66, 67) which can be moved in the horizontal direction and whose piston rods (68, 69) can be extended on both sides in opposite directions in order to actuate holding elements of the pallet gripper (36).

5. Lifting apparatus according to Claim 4 or one of the further claims, **characterized in that** on the pallet gripper (36), gripping elements are mounted in guides such that they can be displaced laterally, in particular can be extended and retracted in the horizontal plane, drivers being fitted to the holding elements, in particular upright connecting plates (62), on which the piston rods (68, 69) of the pressure-medium cylinders (66, 67) obtain contact when extended for the purpose of the sideways movement of the holding elements or load-bearing legs (55, 56).

6. Lifting apparatus according to Claim 5 or one of the further claims, **characterized in that** the holding elements, in particular load-bearing legs (55, 56), of the pallet gripper (36) can be moved towards each other by means of return elements arranged on the pallet gripper, in particular by tension springs (72, 73).

7. Lifting apparatus according to Claim 1 or one of the further claims, **characterized in that** a load-bearing part of the lifting head (13) can be displaced elastically in the upward direction, in particular the main plate (41), which is mounted on load-bearing bolts (42) by compressible spring elements, specifically compression springs (47).

8. Lifting apparatus according to Claim 1 or one of the further claims, **characterized in that** cartons which can be picked up by the palletizer (11) for loading the pallets (10) by means of a plurality of, in particular four, carton conveyors (16, 17, 18, 19) open in the working area (14) of the palletizer (11), and **in that** likewise a plurality of, in particular four, pallet stations (22, 23, 24, 25) each having a pallet (10) to be loaded are formed in the working area (14) of the palletizer (11), the carton conveyors (16..19) each being assigned to a pallet station (22..25) in such a way that the cartons (15) arriving on the carton conveyors (16..19) can in each case be placed on one of the pallets (10) by the common palletizer (11).

9. Lifting apparatus according to Claim 8, **characterized in that** in each case two carton conveyors (16, 17; 18, 19) preferably running in parallel adjoin a common feeder (20, 21) for cartons (15).

10. Lifting apparatus according to Claim 8 or 9, **characterized in that** in the working area (14) of the palletizer (11), a stacking station (33) for empty pallets (10) to be loaded and, if appropriate, a supply of interlayers (35) comprising interlayers stacked one above another is additionally formed.

11. Lifting apparatus according to Claim 8 or one of the further claims, **characterized in that** in the working area (14) of the palletizer (11) a storage station (81) for an additional holder, in particular for a pallet gripper (36) is formed, in particular a table-like load-bearing device with a storage plate for the pallet gripper (36).

## Revendications

1. Appareil élévateur, à savoir palettiseur (11), comportant une flèche constituée d'un bras articulé (12) et un récepteur monté sur celle-ci pour le chargement et le déchargement de palettes (10) ou d'objets semblables, **caractérisé par** les caractéristiques suivantes :
a) le récepteur de l'appareil élévateur (11) est une tête élévatrice (13) à organes aspirants, à savoir rampes aspirantes (39, 40), pour la saisie des objets à transporter,
b) à la tête élévatrice (13) est fixé de manière détachable un récepteur supplémentaire, en particulier un préhenseur de palettes (36), qui sert à la saisie et au maintien d'autres objets à transporter,
c) le récepteur supplémentaire peut être fixé à la tête élévatrice (13) par les organes aspirants ou les rampes aspirantes (39, 40).

2. Appareil élévateur selon la revendication 1, **caractérisé par le fait que** le récepteur supplémentaire, en particulier le préhenseur de palettes (36), présente des organes mobiles de maintien pour la saisie d'un objet, en particulier des griffes de maintien, des branches supports (55, 56) ou des éléments semblables, qui peuvent être sortis et rentrés par des organes de manoeuvre, tels que vérins (66, 67), placés sur la tête élévatrice (13).

3. Appareil élévateur selon l'une des revendications 1 et 2, **caractérisé par le fait que** le récepteur supplémentaire, en particulier le préhenseur de palettes (36), peut être fixé de manière détachable à la tête élévatrice (13) par des organes d'accouplement mécaniques supplémentaires, en particulier par au moins un bloc support (75, 76) qui, lors du mouvement des organes préhenseurs ou des branches supports (55, 56) dans la position de préhension, peuvent être mis en position de verrouillage ou d'accouplement.

4. Appareil élévateur selon la revendication 2 ou une des autres revendications, **caractérisé par le fait que** sur la tête élévatrice (13), en particulier sur une plaque principale (41) sont placés des vérins (66, 67) mobiles en direction horizontale dont les tiges de piston (68, 69) peuvent être sorties des deux côtés dans des directions opposées pour la manoeuvre d'organes de maintien du préhenseur de palettes (36).

5. Appareil élévateur selon la revendication 4 ou une des autres revendications, **caractérisé par le fait que** sur le préhenseur de palettes (36), des organes préhenseurs sortables et rentables latéralement, en particulier dans un plan horizontal, sont montés mobiles dans des guidages, sur les organes de maintien étant montés des entraîneurs, en particulier des plaques de liaison verticales (62) sur lesquelles les tiges de piston (68, 69) des vérins (66, 67) prennent appui lors de la sortie pour le mouvement de côté des organes de maintien ou des branches de support (55, 56).

6. Appareil élévateur selon la revendication 5 ou une des autres revendications, **caractérisé par le fait que** les organes de maintien, en particulier les branches supports (55, 56) du préhenseur de palettes (36), peuvent être mus en direction l'un de l'autre par des organes de rappel placés sur le préhenseur de palettes, en particulier par des ressorts de traction (72, 73).

7. Appareil élévateur selon la revendication 1 ou une des autres revendications, **caractérisé par le fait qu'**une partie support de la tête élévatrice (13) est déplaçable élastiquement vers le haut, en particulier la plaque principale (41) qui est montée sur des boulons supports (42) à éléments élastiques compressibles, à savoir ressorts de compression (47).

8. Appareil élévateur selon la revendication 1 ou une des autres revendications, **caractérisé par le fait que** des cartons pouvant être reçus par le palettiseur (11) pour le chargement des palettes (10) débouchent par plusieurs, en particulier quatre, transporteurs de cartons (16, 17, 18, 19) dans la zone de travail (14) du palettiseur (11) et qu'également plusieurs, en particulier quatre, postes à palettes (22, 23, 24, 25) chacun avec une palette (10) à charger, sont formés dans la zone de travail (14) du palettiseur (11), les transporteurs de cartons (16 à 19) étant associés chacun à un poste à palettes (22 à 25) de façon telle que les cartons (15) qui arrivent sur les transporteurs de cartons (16 à 19) puissent être déposés chacun par le palettiseur commun (11) sur une des palettes (10).

9. Appareil élévateur selon la revendication 8, **caractérisé par le fait que** chaque fois deux transporteurs de cartons (16, 17 ; 18, 19) marchant de préférence parallèlement font suite à un transporteur commun (20, 21) d'alimentation en cartons (15).

10. Appareil élévateur selon l'une des revendications 8 et 9, **caractérisé par le fait que** dans la zone de travail (14) du palettiseur (11) est en plus formé un poste d'empilage (33) pour palettes (10) vides à charger et éventuellement une provision (35) de couches intermédiaires empilées.

11. Appareil élévateur selon la revendication 8 ou une des autres revendications, **caractérisé par le fait que** dans la zone de travail (14) du palettiseur (11) est formé un poste d'appui (81) pour un récepteur supplémentaire, en particulier pour un préhenseur de palettes (36), en particulier un dispositif support du genre table avec plaque d'appui pour le préhenseur de palettes (36).
